# EUROPÄISCHE PATENTSCHRIFT

(11) **EP 3 687 855 B1**
(45) Veröffentlichungstag und Bekanntmachung des Hinweises auf die Patenterteilung: **14.06.2023**
(21) Anmeldenummer: 18759913.9
(22) Anmeldetag: 21.08.2018
(51) Int. Cl.: B60P 1/52, B65G 65/00

(54) **VORRICHTUNG ZUR LASTÜBERGABE**
DEVICE FOR LOAD TRANSFER
DISPOSITIF DE TRANSFERT DE CHARGE

(30) Priorität: 29.09.2017 DE 102017122704
(43) Veröffentlichungstag der Anmeldung: 05.08.2020
(73) Patentinhaber: LR Intralogistik GmbH, 84109 Wörth a. d. Isar (DE)
(72) Erfinder: BERGHAMMER, Fritz, 84028 Landshut (DE)
(74) Vertreter: Patentship Patentanwaltgesellschaft
(86) Internationale Anmeldenummer: PCT/EP2018/072500
(87) Internationale Veröffentlichungsnummer: WO 2019/063201

(56) Entgegenhaltungen:
- EP-A1- 3 150 522
- DE-A1-102009 016 743
- US-A- 4 944 357
- US-A- 5 664 929

## Beschreibung

Die Erfindung betrifft eine Vorrichtung, umfassend eine ortsfeste Übernahmestation und einen mindestens einen Trailerzuganhänger und ein Zugfahrzeug umfassenden Trailerzug zur Übergabe von Lasten von dem Trailerzuganhänger in die ortsfeste Übernahmestation, wobei der Trailerzuganhänger mit einem von einem Motor angetriebenen Stetigförderer zur Aufnahme der Last versehen ist, wobei der Motor des Stetigförderers des Trailerzuganhängers von einer Batterie des Trailerzuges versorgt ist.

Für den werksinternen Transport von Lasten, beispielsweise Paletten oder Gitterboxen zur Aufnahme von Ladungen, werden in zunehmendem Umfang Trailerzüge eingesetzt, deren Trailerzuganhänger von einem Zugfahrzeug zu den gewünschten Übernahmestationen verfahren werden.

Aus der DE 20 2013 102 199 U1 ist eine gattungsgemäße Vorrichtung zur Übergabe von Lasten von dem Hubtisch eines Trailerzuganhängers eines Trailerzuges in eine ortsfeste Übernahmestation beschrieben. Um eine vereinfachte Be- und Entladung zu ermöglichen, die ohne Muskelkraft auskommt und die Bedienungsperson weitestgehend entlastet, hat der Trailerzuganhänger einen integrierten Stetigförderer, der von einem Motor angetrieben wird. Dessen Stromversorgung wird von einer Batterie übernommen, die in dem Zugfahrzeug des Trailerzugs untergebracht ist. In den Umschlagpositionen muss dafür gesorgt werden, dass der Trailerzuganhänger in einer vorbestimmten Stellung relativ zu der ortsfesten Übernahmestation ausgerichtet ist. Der Stetigförderer ist in Querrichtung des Trailerzuganhängers mittels eines Schlittens verschiebbar, um die Ladung vom Trailerzuganhänger an die Übernahmestation abgeben von der Übernahmestation auf den Trailerzuganhänger aufnehmen zu können. Mit dem querverschiebbaren Stetigförderer am Trailerzuganhänger kann die Aufnahme bzw. Abgabe einer Last auch an eine ortsfeste Übernahmestation erfolgen. Ein mittels eines Schlittens in Querrichtung des Trailerzuganhängers querverschiebbarer Stetigförderer führt jedoch zu einem hohen Bauaufwand des Trailerzuganhängers.

Aus der DE 20 2015 105 184 U1 ist eine Vorrichtung zur Übergabe von Lasten von einem Hubtisch des Trailerzuganhängers eines Trailerzugs in eine ortsfeste Übernahmestation bekannt, wobei auf dem Hubtisch ein von einem Motor angetriebener Stetigförderer zur Aufnahme der Last angeordnet und der Hubtisch mittels eines Huborgans relativ zum Fahrwerk des Trailerzuganhängers höhenverstellbar ist. Bei der aus der DE 20 2015 105 184 U1 bekannten Vorrichtung ist der Motor des Stetigförderers des Trailerzuganhängers nicht an die Batterie des Zugfahrzeugs des Trailerzugs angeschlossen, sondern in der Umschlagposition erfolgt ein Anschluss des Motor des Stetigförderers des Trailerzuganhängers an stromführende Kontakte der ortsfesten Übernahmestation. Die stromführenden Kontakte der Übernahmestation können zur elektrischen Anbindung an ein Stromnetz eines Gebäudes angeschlossen sein, in der die Übernahmestation aufgestellt ist.

Sofern auch an der Übernahmestation ein von einem weiteren Motor angetriebener weiterer Stetigförderer zur Aufnahme der Last angeordnet ist, ist dieser bei bekannten gattungsgemäßen Vorrichtungen zur elektrischen Anbindung an ein Stromnetz eines Gebäudes angeschlossen, in der die Übernahmestation aufgestellt ist.

Die Versorgung des weiteren Motors der Übernahmestation, der den Stetigförderer der Übernahmestation antreibt, an das Stromnetz eines Gebäudes, führt jedoch zu dem Nachteil, dass bei einer Veränderung des Aufstellungsortes der ortsfesten Übernahmestation, auch an den neuen Aufstellungsort der ortsfesten Übernahmestation ein Stromanschluss gelegt werden muss, um den Motor des Stetigförderers der ortsfesten Übernahmestation mit dem Stromnetz des Gebäudes verbinden zu können. Dies führt bei der Veränderung des Aufstellungsortes der ortsfesten Übernahmestation zu einem hohen Installationsaufwand für den Stromanschluss des Motors des Stetigförderers der Übernahmestation.

Die US 5 664 929 A und die US 4 944 357 A offenbaren jeweils ein fahrerloses Fahrzeug mit einem von einem Motor angetriebenen Stetigförderer und eine ortsfeste Übernahmestation, die mit einem von einem Motor angetriebenen Stetigförderer versehen ist. Das Fahrzeug fährt auf einer Fahrlinie entlang der Übernahmestationen und übergibt mittels des Stetigförderers eine Ladung zwischen dem Fahrzeug und der Übernahmestation.

Die DE 10 2009 016 743 A1 offenbart eine gattungsgemäße Vorrichtung, umfassend eine ortsfeste Übernahmestation und einen mindestens einen Trailerzuganhänger und ein Zugfahrzeug umfassenden Trailerzug zur Übergabe von Lasten von dem Trailerzuganhänger in die ortsfeste Übernahmestation, wobei der Trailerzuganhänger mit einem von einem Elektromotor angetriebenen Stetigförderer zur Aufnahme der Last versehen ist, wobei der Elektromotor des Stetigförderers des Trailerzuganhängers von einer Batterie des Trailerzuges versorgt ist. Zur Betätigung des den Stetigförderer am Routenzuganhänger betätigenden Elektromotors sind an dem Trailerzuganhänger entsprechende Schalter angeordnet, mit denen eine Bedienperson an den Trailerzuganhängern bei gutem Überblick über den Belade- und Entladevorgang die Bewegung des Stetigförderers steuern kann.

Der vorliegenden Erfindung liegt die Aufgabe zugrunde, eine Vorrichtung der eingangs genannten Gattung zur Verfügung zu stellen, bei der der Aufstellungsort der ortsfesten Übernahmestation verändert werden kann ohne Installationsaufwand für den Stromanschluss des Motors des Stetigförderers der Übernahmestation zu verursachen.

Diese Aufgabe wird erfindungsgemäß dadurch gelöst, dass an der Übernahmestation ein von einem weiteren Motor angetriebener weiterer Stetigförderer zur Aufnahme der Last angeordnet ist, wobei der weitere Motor des weiterer Stetigförderers an der Übernahmestation in einer vorbestimmten Umschlagposition von der Batterie des Trailerzugs versorgt ist. Durch die erfindungsgemäße elektrische Anbindung des weiteren Motors des weiteren Stetigförderers der ortsfesten Übernahmestation an die Batterie des Trailerzuges ist keine elektrische Anbindung und somit kein Stromanschluss des weiteren Motors des weiteren Stetigförderers der ortsfesten Übernahmestation an ein Stromnetz des Gebäudes erforderlich, so dass keine elektrische Anbindung der Übernahmestation an ein Stromnetz des Gebäudes erforderlich ist. Der Aufstellungsort der ortsfesten Übernahmestation kann somit mit geringem Bauaufwand verändert werden, da an dem neuen Aufstellungsort der ortsfesten Übernahmestation kein Stromanschluss mit dem Stromnetz des Gebäudes und somit kein Installationsaufwand für einen Stromanschluss des Motors des Stetigförderers der Übernahmestation an das Stromnetz des Gebäudes erforderlich ist.

Gemäß einer vorteilhaften Ausgestaltungsform der Erfindung ist an der Übernahmestation mindestens ein Kontakt vorgesehen, an dem in der vorbestimmten Umschlagposition mindestens ein mit der Batterie des Trailerzugs in Verbindung stehender Kontakt, insbesondere ein Schaltkontakt, des Trailerzuganhängers in Verbindung bringbar ist und dadurch einen Stromkreis zur Spannungsversorgung des weiteren Motors des weiterer Stetigförderers an der Übernahmestation schließt. Mit mindestens einem Kontakt am Trailerzuganhänger, der mit der Batterie des Trailerzugs in Verbindung steht, und einem entsprechenden Gegenkontakt an der ortsfesten Übernahmestation kann auf einfache Weise bei Erreichen der Umschlagposition der mit der Batterie des Trailerzuges in Verbindung stehende Kontakt des Trailerzuganhängers mit dem Kontakt an der Übernahmestation in Verbindung gelangen und eine Verbindung von der Batterie des Trailerzugs zu dem Motor an der Übernahmestation hergestellt werden, um den Motor des Stetigförderers der Übernahmestation zur elektrischen Versorgung mit der Batterie des Trailerzugs zu verbinden.

Vorteilhafterweise ist an der Übernahmestation eine Sensoreinrichtung zum Erkennen der vorbestimmten Umschlagposition des Trailerzuganhängers vorgesehen. Mit einer Sensoreinrichtung kann auf einfache Weise die vorbestimmte Umschlagposition des Trailerzuganhängers an der Übernahmestation erkannt werden.

Die Batterie des Trailerzugs kann von einer Batterie gebildet sein, die am Trailerzuganhänger angeordnet ist.

Besondere Vorteile ergeben sich, wenn gemäß einer Ausgestaltungsform der Erfindung eine Batterie des Zugfahrzeugs die Versorgung des Motors des Stetigförderers des Trailerzuganhängers und die Versorgung des weiteren Motors des weiteren Stetigförderers an der Übernahmestation übernimmt. Eine Batterie des Zugfahrzeugs weist eine entsprechend große Kapazität auf, um den Motor des Stetigförderers des Trailerzuganhängers und den weiteren Motor des weiteren Stetigförderers an der Übernahmestation zu versorgen und kann auf einfache Weise wieder aufgeladen werden. Hierzu ist lediglich an dem Trailerzug eine entsprechende Verbindung der Batterie des Zugfahrzeugs mit den entsprechenden Trailerzuganhängern erforderlich, die einfach mit einem entsprechenden Verbindungskabel hergestellt werden kann.

Gemäß einer vorteilhaften Ausführungsform ist der Kontakt der Übernahmestation auf dem Boden angeordnet. Dies ergibt einen einfachen Installationsaufwand für den Kontakt der Übernahmestation.

Gemäß einer vorteilhaften Ausführungsform ist der Kontakt der Übernahmestation an einer ortsfesten Schiene angebracht. Dies ergibt einen einfachen Installationsaufwand für den Kontakt der Übernahmestation.

Zweckmäßigerweise ist die Sensoreinrichtung ebenfalls an der ortsfesten Schiene angebracht.

Besondere Vorteile ergeben sich, wenn der Kontakt der Übernahmestation direkt an der Übernahmestation angebracht ist. Der Kontakt kann beispielsweise formschlüssig an der Übernahmestation angebracht und befestigt sein. Dies ermöglicht eine besonders einfache Veränderung des Aufstellungsortes der ortsfesten Übernahmestation, da die Übernahmestation zusammen mit dem Kontakt an einem neuen Aufstellungsort aufgestellt werden kann, ohne den Kontakt separat auf dem Boden befestigen zu müssen.

Besondere Vorteile ergeben sich, wenn der Trailerzuganhänger mit zwei horizontal voneinander beabstandeten Kontakten versehen ist, die zur Drehrichtungsumkehr des weiteren Motors des Stetigförderers der Übernahmestation umpolbar sind. Dadurch kann der weitere Stetigförderer der ortsfesten Übernahmestation auf einfache Weise entweder den Entladevorgang oder in umgekehrter Richtung den Beladevorgang ausführen.

Vorteilhafterweise ist der von dem Motor angetriebene Stetigförderer des Trailerzuganhängers in der Umschlagposition höhengleich zu dem weiteren Stetigförderer der ortsfesten Übernahmestation ausgerichtet. Dadurch kann eine Last auf einfache und sichere Weise höhengleich von dem Trailerzuganhänger auf die ortsfeste Übernahmestation und von der ortsfesten Übernahmestation auf den Trailerzuganhänger bewegt werden.

Der Stetigförderer des Trailerzuganhängers kann als Bandförderer oder als Rollenbahn oder als Kettenförderer ausgebildet sein. Der weitere Stetigförderer der Übernahmestation kann als Bandförderer oder als Rollenbahn oder als Kettenförderer ausgebildet sein. Mit einem Bandförderer oder einer Rollenbahn oder einem Kettenförderer kann eine Last, beispielsweise eine Palette oder eine Gitterbox, auf einfache Weise quer zur Fahrtrichtung des Fahrzeugs des Trailerzuganhängers bewegt werden.

Gemäß einer vorteilhaften Ausgestaltungsform der Erfindung weist der Trailerzuganhänger einen Hubtisch auf, der mit dem Stetigförderer versehen ist. Mit einem Hubtisch, an dem der Stetigförderer angeordnet ist, kann auf einfache Weise eine höhengleiche Ausrichtung des Stetigförderers des Trailerzuganhängers zu dem weiteren Stetigförderer der ortsfesten Übernahmestation erzielt werden, insbesondere wenn mehrere Übernahmestationen mit unterschiedlichen Höhenniveaus der weiteren Stetigförderer vorhanden sind.

Vorteilhafterweise ist der Hubtisch weiterhin mit dem Kontakt versehen. Durch Absenken des Hubtisches, um den Stetigförderer des Hubtisches höhengleich zu dem weiteren Stetigförderer der Übernahmestation auszurichten, kann somit auch der mit der Batterie des Trailerzugs verbundene Kontakt an dem Hubtisch mit dem Kontakt der ortsfesten Übernahmestation verbunden werden, um den Motor des weiteren Stetigförderers der Übernahmestation mit Strom aus der Batterie des Trailerzugs anzutreiben.

Bevorzugt ist der Hubtisch mittels eines Huborgans relativ zu einem Fahrwerk des Trailerzuganhängers höhenverstellbar ist.

Vorteile ergeben sich hierbei, wenn in der vorbestimmten Umschlagposition beim Absenken des Hubtisches der mit der Batterie des Trailerzugs in Verbindung stehende Kontakt des Trailerzuganhängers an dem Kontakt der Übernahmestation anschlägt. In der vorbestimmten Umschlagposition kann somit beim Absenken des Hubtisches in eine Übergabestellung mindestens ein mit der Batterie des Trailerzugs in Verbindung stehender Kontakt, insbesondere ein Schaltkontakt, des Trailerzuganhängers an dem Kontakt der Übernahmestation anschlagen und dadurch den Stromkreis zur Spannungsversorgung des weiteren Motors des weiterer Stetigförderers an der Übernahmestation schließen. Mit mindestens einem Kontakt am Hubtisch des Trailerzuganhängers, der mit der Batterie des Trailerzugs in Verbindung steht, und einem entsprechenden Gegenkontakt an der ortsfesten Übernahmestation kann auf einfache Weise bei Erreichen der Umschlagposition und Absenken des Hubtisches der mit der Batterie des Trailerzuges in Verbindung stehende Kontakt am Hubtisch des Trailerzuganhängers mit dem Kontakt an der Übernahmestation in Verbindung gelangen und eine Verbindung von der Batterie des Trailerzugs zu dem Motor an der Übernahmestation hergestellt werden, um den Motor des Stetigförderers der Übernahmestation zur elektrischen Versorgung mit der Batterie des Trailerzugs zu verbinden.

Der Trailerzuganhänger hat gemäß einer vorteilhaften Ausführungsform der Erfindung einen den Hubtisch bildenden oder diesen aufnehmenden Tragrahmen. Der Hubtisch kann somit auf einem Tragrahmen angeordnet sein oder direkt von dem Tragrahmen des Trailerzuganhängers gebildet sein.

Gemäß einer vorteilhaften Ausgestaltungsform der Erfindung weist der Trailerzuganhänger einen mit einem Fahrwerk versehenen Tragrahmen auf, der mit dem Stetigförderer versehen ist. Der Trailerzuganhänger ist somit als starrer Anhänger ohne Hubtisch ausgebildet, der einen besonders einfachen Aufbau aufweist. Mit einem derartigen Trailerzuganhänger kann auf einfache Weise eine höhengleiche Ausrichtung des Stetigförderers des Trailerzuganhängers zu dem weiteren Stetigförderer der ortsfesten Übernahmestation erzielt werden, insbesondere wenn mehrere Übernahmestationen mit jeweils gleichem Höhenniveau der weiteren Stetigförderer vorhanden sind.

Vorteilhaferweise ist hierbei der Kontakt an dem Tragrahmen höhenverstellbar angeordnet und mittels eines Huborgans relativ zum Tragrahmen des Trailerzuganhängers höhenverstellbar. Durch Absenken des Kontaktes relativ zu dem mit dem Stetigförderer versehen Tragrahmen kann somit auf einfache Weise der mit der Batterie des Trailerzugs verbundene Kontakt des Trailerzuganhängers mit dem Kontakt der ortsfesten Übernahmestation verbunden werden, um den Motor des weiteren Stetigförderers der Übernahmestation mit Strom aus der Batterie des Trailerzugs anzutreiben. In der vorbestimmten Umschlagposition kann somit beim Absenken des Kontaktes der mit der Batterie des Trailerzugs in Verbindung stehender Kontakt, insbesondere ein Schaltkontakt, des Trailerzuganhängers an dem Kontakt der Übernahmestation anschlagen und dadurch den Stromkreis zur Spannungsversorgung des weiteren Motors des weiterer Stetigförderers an der Übernahmestation schließen. Mit mindestens einem höhenverstellbar am Tragrahmen angeordneten Kontakt des Trailerzuganhängers, der mit der Batterie des Trailerzugs in Verbindung steht, und einem entsprechenden Gegenkontakt an der ortsfesten Übernahmestation kann somit auf einfache Weise bei Erreichen der Umschlagposition und Absenken des Kontaktes der mit der Batterie des Trailerzuges in Verbindung stehende Kontakt des Trailerzuganhängers mit dem Kontakt an der Übernahmestation in Verbindung gelangen und eine Verbindung von der Batterie des Trailerzugs zu dem Motor an der Übernahmestation hergestellt werden, um den Motor des Stetigförderers der Übernahmestation zur elektrischen Versorgung mit der Batterie des Trailerzugs zu verbinden.

Gemäß einer vorteilhaften Weiterbildung der Erfindung ist der Kontakt an einem mittels des Huborgans höhenverstellbaren Träger angeordnet, der mit einer Abstützvorrichtung, insbesondere einer Stützrolle, zum Abstützen des Trailerzuganhängers auf dem Boden versehen ist. Mit der Abstützvorrichtung kann durch deren Absenken auf den Boden insbesondere ein als Einachsanhänger ausgebildeter Trailerzuganhänger, dessen Achse im Wesentlichen mittig angeordnet ist, in der Umschlagposition auf einfache Weise stabilisiert werden.

Weitere Vorteile ergeben sich, wenn der Träger seitlich an dem Stetigförderer angeordnet ist und in der angehobenen Stellung das Höhenniveau des Stetigförderers überragt. Der Träger bildet somit in der angehobenen Stellung zusätzlich die Funktion eines seitlichen Anschlags, mit dem eine auf dem Stetigförderers des Trailerzuganhängers befindliche Last während der Fahrt des Trailerzugs gegen seitliches Rutschen gesichert werden kann.

Weitere Vorteile und Einzelheiten der Erfindung werden anhand der in den schematischen Figuren dargestellten Ausführungsbeispiele näher erläutert. Hierbei zeigt
- Figur 1: eine schematische Frontalansicht einer ersten Ausführungsform einer erfindungsgemäßen Vorrichtung,
- Figur 2: die perspektivische Schrägansicht einer Anlage mit hier vier hintereinander angeordneten Übernahmestationen gemäß der ersten Ausführungsform der erfindungsgemäßen Vorrichtung,
- Figur 3: in vergrößerter Darstellung eine Übernahmevorrichtung gemäß der ersten Ausführungsform der erfindungsgemäßen Vorrichtung ohne Last,
- Figur 4: in vergrößerter Ansicht einen Teil eines Trailerzuganhängers der ersten Ausführungsform der erfindungsgemäßen Vorrichtung in der Umschlagposition bei geöffneten Kontakten,
- Figur 5: eine der Figur 4 entsprechende Darstellung mit geschlossenen Kontakten,
- Figur 6: einen Trailerzuganhänger gemäß einer zweiten Ausführungsform der erfindungsgemäßen Vorrichtung mit geöffneten Kontakten,
- Figur 7: einen Trailerzuganhänger gemäß der Figur 6 mit geschlossenen Kontakten,
- Figur 8: einen Ausschnitt der Figur 6 in einer vergrößerten Darstellung,
- Figur 9: einen Ausschnitt der Figur 7 in einer vergrößerten Darstellung,
- Figur 10: eine schematische Frontalansicht der zweiten Ausführungsform der erfindungsgemäßen Vorrichtung mit geöffneten Kontakten und
- Figur 11: eine schematische Frontalansicht der zweiten Ausführungsform der erfindungsgemäßen Vorrichtung mit geschlossenen Kontakten.

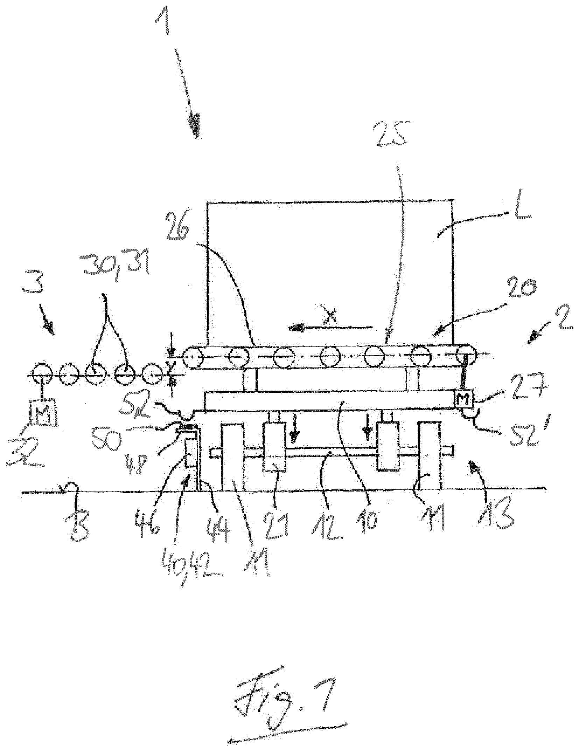

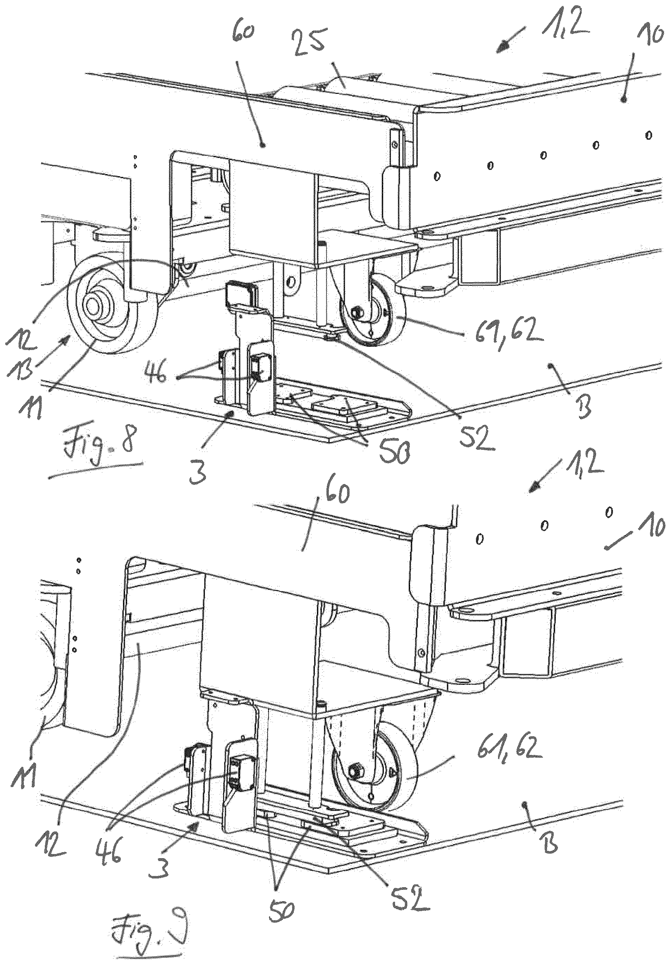

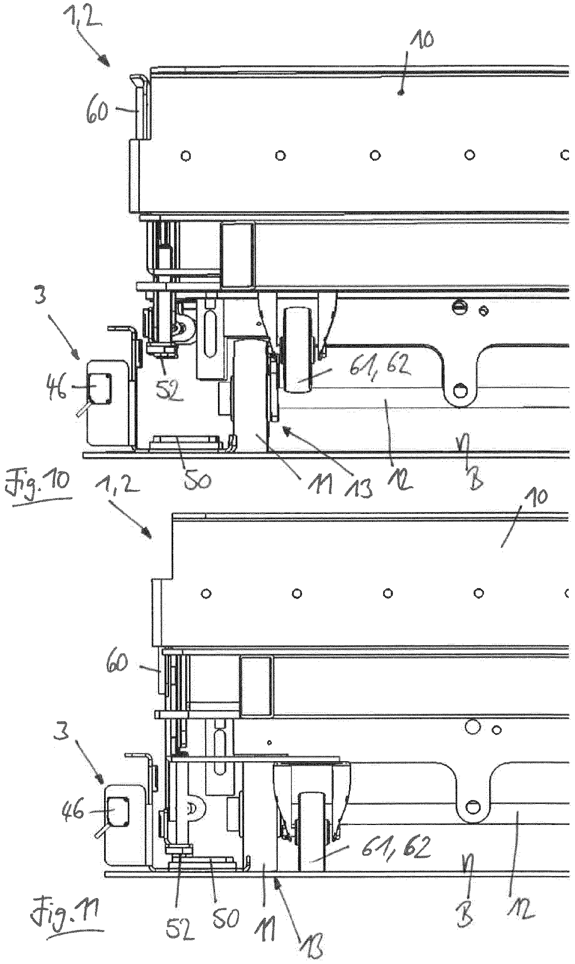

Die in den Figuren 1 bis 11 dargestellte erfindungsgemäße Vorrichtung wird am Beispiel eines Trailerzuges 1 mit mindestens einem Trailerzuganhängers 2 erläutert, wobei von einem Trailerzuganhänger 2 des Trailerzuges 1 eine Last L, beispielsweise eine Palette oder eine Gitterbox, in x-Richtung (Querrichtung des Trailerzuganhängers 2) auf eine ortsfeste Übernahmestation 3 überführt oder von der ortsfesten Übernahmestation 3 in entgegengesetzter Richtung -x auf den Trailerzuganhänger 2 des Trailerzuges 1 abgegeben werden soll.

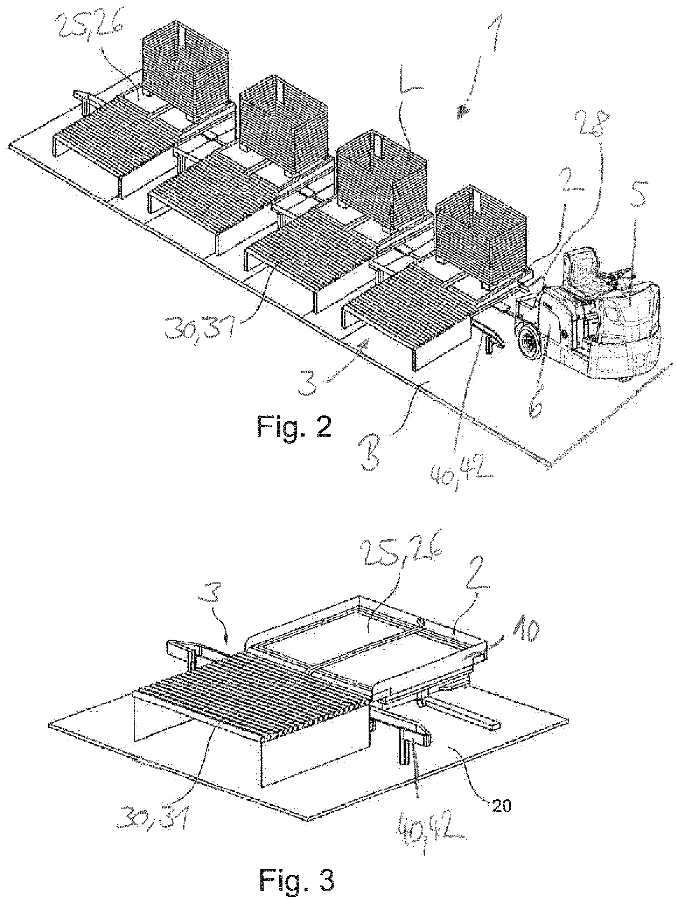

Der Trailerzug 1 weist - wie in der Figur 2 dargestellt ist - ein Zugfahrzug 5 auf, das mit einer Batterie 6 versehen ist. Das Zugfahrzeug 5 weist ein batterie-elektrisches Antriebssystem mit einem elektrischen Fahrantrieb auf, wobei die Batterie 6 vorzugsweise als Traktionsbatterie ausgebildet ist, die den Fahrantrieb des Zugfahrzeugs 5 versorgt.

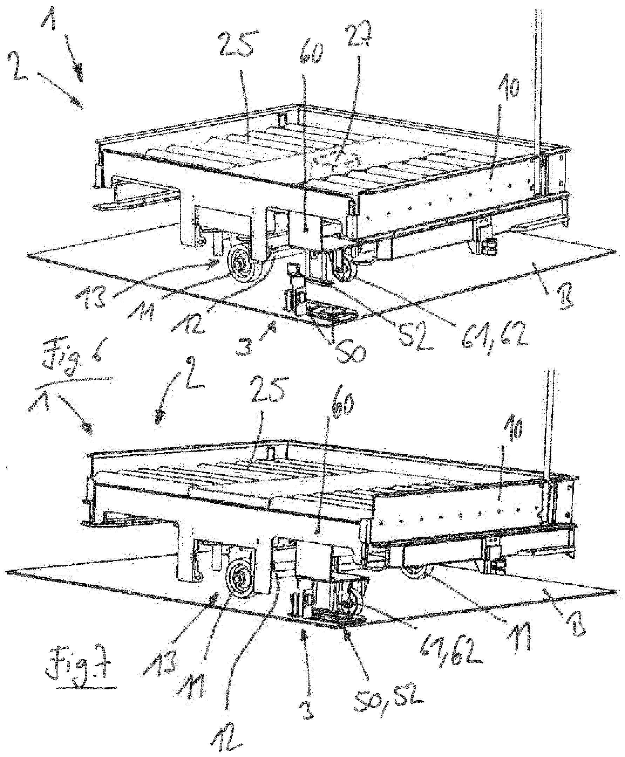

Wie das Ausführungsbeispiel der Figuren 1 bis 5 und das Ausführungsbeispiel der Figuren 6 bis 11 zeigt, hat der Trailerzuganhänger 2 einen Tragrahmen 10, der in Draufsicht E-förmig oder C-förmig ausgeführt sein kann.

Der Tragrahmen 10 ist in den dargestellten Ausführungsbeispielen auf zwei Rädern 11 auf dem Boden B beispielsweise einer Werkshalle verfahrbar, wobei die beiden Räder 11 zusammen mit einer Starrachse 12 Teil des Fahrwerks 13 des Trailerzuganhängers 2 sind.

Der Tragrahmen 10 ist mit einem Stetigförderer 25 versehen. Der Stetigförderer 25 ist von einem elektrischen Motor 27 angetrieben. Im Beispiel der Figuren 1 bis 5 ist der Stetigförderer 25 als Bandförderer 26 ausgebildet. Alternativ kann der Stetigförderer 25 - wie in dem Ausführungsbeispiel der Figuren 6 bis 11 dargestellt ist - von einer Rollenbahn gebildet sein, die von dem elektrischen Motor 27 angetrieben ist.

Der elektrische Motor 27 des Stetigförderers 25 steht zur Versorgung mit der Batterie 6 des Zugfahrzeugs 5 in Verbindung.

Die ortsfeste Übernahmestation 3 ist mit einem weiteren Stetigförderer 30 versehen, der von einem weiteren elektrischen Motor 32 angetrieben ist. Der weitere Stetigförderer 30 kann als Rollenbahn 31 oder als Bandförderer oder als Kettenförderer ausgebildet sein.

In dem Ausführungsbeispiel der Figuren 1 bis 5 ist der Tragrahmen 10 als Hubtisch 20 ausgebildet, der mittels wenigstens eines Huborgans 21 relativ zum Fahrwerk 13 angehoben und abgesenkt werden kann.

Bei dem Trailerzuganhänger 2 der Figuren 1 bis 5 kann über die Huborgane 21 der Hubtisch 20 und mit diesem der Stetigförderer 25 in vertikaler Richtung y auf die Höhe der ortsfesten Übernahmestation 3 abgesenkt werden.

Die Huborgane 21 sind bevorzugt als elektrische Huborgane ausgebildet, die von der Batterie 6 des Zugfahrzeugs 5 versorgt werden.

Zur elektrischen Versorgung des elektrischen Motors 27 des Stetigförderers 25 und/oder der Huborgane 21 sind die Trailerzuganhänger 2 mittels eines Verbindungskabels 28 mit der Batterie 6 des Zugfahrzeugs 5 verbunden.

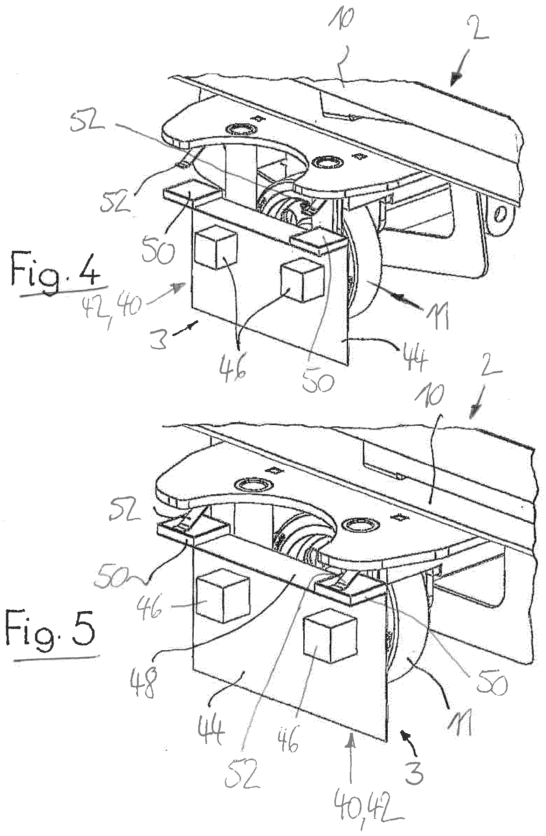

An der ortsfesten Übernahmestation 3 ist, wie in den Figuren 4 und 5 dargestellt ist, eine ortsfeste Schiene 40 angebracht, die aus einem winkelförmigen Träger 42 besteht. An der vertikalen Wand 44 des Trägers 42 sind zwei horizontal voneinander beabstandete Sensoren 46 angeordnet, die in einer vorbestimmten Umschlagposition des Trailerzuganhängers 2 über nicht sichtbare Gegensensoren die exakte Umschlagposition des Trailerzuganhängers 2 erfassen, in der der Stetigförderer 25 des Trailerzuganhängers 2 zu dem weiteren Stetigförderer 30 der ortsfesten Übernahmestation 3 ausgerichtet sein muss.

Der Trailerzuganhänger 2 ist im Bereich der Schiene 40 mit zwei stromführenden Kontakten 52 versehen, die mit der Batterie 6 des Zugfahrzeugs 5 verbunden sind.

Auf dem horizontalen Schenkel 48 des Trägers 42 sind mit Abstand voneinander zwei Kontakte 50 der ortsfesten Übernahmestation 3 befestigt, die mit dem weiteren Motor 32 des weiteren Stetigförderers 30 der ortsfesten Übernahmestation 3 verbunden sind.

Die Kontakte 52 sind an dem Tragrahmen 10 des Trailerzuganhängers 2 angeordnet, so dass diese beim Absenken des Hubtisches 20 mit den beiden Kontakten 50 der Übernahmestation 3 in Kontakt gelangen. Bevorzugt sin die Kontakte 52 des Trailerzuganhängers 2 von Schaltkontakte gebildet.

Wenn der Trailerzuganhänger 2 des Ausführungsbeispiels der Figuren 1 bis 5 in der in Figur 4 gezeigten Übernahmestation 3 angekommen ist, stellen die beiden Sensoren 46 die Position des Trailerzuganhängers 2 fest, die noch korrigiert werden kann, bis die vorbestimmte Umschlagposition des Trailerzuganhängers 2 relativ zu der ortsfesten Übernahmestation 3 mit ihrem Stetigförderer 30 erreicht ist. Durch einen trailerzugseitigen Befehl, der beispielsweise von einem Fahrer des Zugfahrzeuges 5 oder automatisch abgegeben wird, erhalten die Huborgane 21 ein Signal zum Absenken des Hubtisches 20, bis der Stetigförderer 25 des Trailerzuganhängers 2 höhengleich zum Stetigförderer 30 der Übernahmestation 3 abgesenkt ist, um in der vorbestimmten Umschlagposition die Last L höhengleich (y = 0) von dem Stetigförderer 25 des Trailerzuganhängers 2 auf den Stetigförderer 30 der Übernahmestation 3 bzw. von dem Stetigförderer 30 der Übernahmestation 3 auf den Stetigförderer 25 des Trailerzuganhängers 2 überführen zu können. Beim Absenken des Hubtisches 20 gelangen die beiden mit der Batterie 6 des Zugfahrzeugs 5 in Verbindung stehenden Kontakte 52 des Trailerzuganhängers 2 in Berührung mit den Kontakten 50 der ortsfesten Übernahmestation 3. Nach einer kurzen Verzögerung von etwa einer halben Sekunde, die eine Lichtbogenbildung vermeiden soll, wird der anhängerseitige Kontakt 52 mit Strom aus der Batterie 6 des Zugfahrzeugs 5 versorgt, so dass der Stromkreis zur Spannungsversorgung des weiteren Motors 32 des weiteren Stetigförderers 30 der ortsfesten Übernahmestation 3 geschlossen wird, der hierdurch von der Batterie 6 des Zugfahrzeugs 5 versorgt wird und den Stetigförderer 30 antreibt. Mittels des Motors 27, der ebenfalls von der Batterie 6 des Zugfahrzeugs 5 versorgt wird, wird ebenfalls der Stetigförderer 25 des Trailerzuganhängers 2 entsprechend angetrieben.

Für die Abgabe einer L von dem Trailerzuganhänger 2 auf die ortsfeste Übernahmestation 3 werden die Motoren 27, 32 derart betrieben, dass die Last in Richtung x (siehe Fig. 1) höhengleich von dem Stetigförderer 25 des Trailerzuganhängers 2 auf den Stetigförderer 30 der Übernahmestation 3 verschoben wird. Entsprechend werden für die Aufnahme einer L von der Übernahmestation 3 auf den Trailerzuganhänger 2 die Motoren 27, 32 derart betrieben, dass die Last in Richtung -x (siehe Fig. 1) höhengleich von dem Stetigförderer 30 der Übernahmestation 3 auf den Stetigförderer 25 des Trailerzuganhängers 2 verschoben wird.

Wenn die Sensoren 46 eine von der exakten Umschlagposition des Trailerzuganhängers 2 abweichende Fehlstellung feststellen, bleibt der Kontakt 52 stromlos, so dass die Spannungsversorgung des Motors 32 unterbrochen bleibt.

Der Tragrahmen 10 kann - wie in der Figur 1 dargestellt ist - auch an der gegenüberliegenden Längsseite mindestens einen Kontakt 52' aufweisen, so dass die erläuterte Lastübergabe oder Lastübernahme auch durchgeführt werden kann, wenn der Trailerzuganhänger 2 in umgekehrter Stellung in die Übernahmestation 3 eingefahren ist.

In dem Ausführungsbeispiel der Figuren 6 bis 11 weist der Trailerzuganhänger 2 einen starr mit dem Fahrwerk 13 versehenen Tragrahmen 10 auf, der mit dem Stetigförderer 25 versehen ist. Der Trailerzuganhänger 2 der Figuren 6 bis 11 ist somit als starrer Trailerzuganhänger 2 ohne Hubtisch ausgebildet.

In dem Ausführungsbeispiel der Figuren 6 bis 11 ist die ortsfeste Übergabestation 3 mit zwei horizontal voneinander beabstandete Sensoren 46 versehen, die in einer vorbestimmten Umschlagposition des Trailerzuganhängers 2 über nicht sichtbare Gegensensoren die exakte Umschlagposition des Trailerzuganhängers 2 erfassen, in der der Stetigförderer 25 des Trailerzuganhängers 2 zu dem weiteren Stetigförderer 30 der ortsfesten Übernahmestation 3 ausgerichtet sein muss.

Der Trailerzuganhänger 2 der Figuren 6 bis 11 ist mit mindestens einem stromführenden Kontakt 52 versehen, der mit der Batterie 6 des Zugfahrzeugs 5 verbunden ist.

Der Kontakt 52 ist an dem Tragrahmen 10 höhenverstellbar angeordnet und mittels eines nicht näher dargestellten Huborgans relativ zum Tragrahmen 10 des Trailerzuganhängers 2 höhenverstellbar.

Das Huborgan ist bevorzugt als elektrisches Huborgan ausgebildet, das von der Batterie 6 des Zugfahrzeugs 5 versorgt wird.

Zur elektrischen Versorgung des elektrischen Motors 27 des Stetigförderers 25 und/oder des Huborgans für die Kontakte 52 ist der Trailerzuganhänger 2 der Figuren 6 bis 11 mittels eines Verbindungskabels mit der Batterie 6 des Zugfahrzeugs 5 verbunden.

Die ortsfeste Übernahmestation des Ausführungsbeispiels der Figuren 6 bis 11 ist mit zwei mit Abstand voneinander angeordneten Kontakten 50 versehen, die mit dem weiteren Motor 32 des weiteren Stetigförderers 30 der ortsfesten Übernahmestation 3 verbunden sind.

Der Kontakt 52 des Trailerzuganhängers 2 ist bevorzugt an einem mittels des Huborgans höhenverstellbaren Träger 60 angeordnet. Der Träger 60 ist im Ausführungsbeispiel der Figuren 6 bis 11 weiterhin mit einer Abstützvorrichtung 61, beispielsweise einer Stützrolle 62, zum Abstützen des Trailerzuganhängers 2 auf dem Boden B versehen.

Der Träger 60 ist bevorzugt seitlich an dem Stetigförderer 25 angeordnet und überragt mit der Oberkante in der angehobenen Stellung, die in den Figuren 6, 8 und 10 dargestellt ist, das Höhenniveau des Stetigförderers 25.

Der Kontakt 52 ist derart an dem Träger 60 des Trailerzuganhängers 2 angeordnet, dass dieser beim Absenken des Trägers 60 mit den beiden Kontakten 50 der Übernahmestation 3 in Kontakt gelangt. Bevorzugt ist der Kontakt 52 des Trailerzuganhängers 2 von einer Schaltplatte gebildet.

Wenn der Trailerzuganhänger 2 gemäß dem Ausführungsbeispiel der Figuren 6 bis 11 in der in den Figur 6, 8, 10 gezeigten Übernahmestation 3 angekommen ist, stellen die beiden Sensoren 46 die Position des Trailerzuganhängers 2 fest, die noch korrigiert werden kann, bis die vorbestimmte Umschlagposition des Trailerzuganhängers 2 relativ zu der ortsfesten Übernahmestation 3 mit ihrem Stetigförderer 30 erreicht ist. Durch einen trailerzugseitigen Befehl, der beispielsweise von einem Fahrer des Zugfahrzeuges 5 oder automatisch abgegeben wird, erhält das Huborgan ein Signal zum Absenken des Trägers 60, so dass der mit der Batterie 6 des Zugfahrzeugs 5 in Verbindung stehende Kontakt 52 des Trailerzuganhängers 2, der am Träger 60 angeordnet ist, in Berührung mit den Kontakten 50 der ortsfesten Übernahmestation 3 gelangt, wie in den Figuren 7, 9 und 11 dargestellt ist. Dabei gelangt ebenfalls das von der Stützrolle 62 gebildete Abstützelement 61 in Kontakt mit dem Boden B, um den Trailerzuganhänger 2 zu stabilisieren. Nach einer kurzen Verzögerung von etwa einer halben Sekunde, die eine Lichtbogenbildung vermeiden soll, wird der anhängerseitige Kontakt 52 mit Strom aus der Batterie 6 des Zugfahrzeugs 5 versorgt, so dass der Stromkreis zur Spannungsversorgung des weiteren Motors 32 des weiteren Stetigförderers 30 der ortsfesten Übernahmestation 3 geschlossen wird, der hierdurch von der Batterie 6 des Zugfahrzeugs 5 versorgt wird und den Stetigförderer 30 antreibt. Mittels des Motors 27, der ebenfalls von der Batterie 6 des Zugfahrzeugs 5 versorgt wird, wird ebenfalls der Stetigförderer 25 des Trailerzuganhängers 2 entsprechend angetrieben.

Bei dem Ausführungsbeispiel der Figuren 6 bis 11 ist der Stetigförderer 25 des Trailerzuganhängers 2 höhengleich zum Stetigförderer 30 der Übernahmestation 3 angeordnet, so dass in der vorbestimmten Umschlagposition die Last L höhengleich von dem Stetigförderer 25 des Trailerzuganhängers 2 auf den Stetigförderer 30 der Übernahmestation 3 bzw. von dem Stetigförderer 30 der Übernahmestation 3 auf den Stetigförderer 25 des Trailerzuganhängers 2 überführt werden kann.

Für die Abgabe einer L von dem Trailerzuganhänger 2 auf die ortsfeste Übernahmestation 3 werden die Motoren 27, 32 derart betrieben, dass die Last höhengleich von dem Stetigförderer 25 des Trailerzuganhängers 2 auf den Stetigförderer 30 der Übernahmestation 3 verschoben wird. Entsprechend werden für die Aufnahme einer L von der Übernahmestation 3 auf den Trailerzuganhänger 2 die Motoren 27, 32 derart betrieben, dass die Last höhengleich von dem Stetigförderer 30 der Übernahmestation 3 auf den Stetigförderer 25 des Trailerzuganhängers 2 verschoben wird.

Wenn die Sensoren 46 eine von der exakten Umschlagposition des Trailerzuganhängers 2 abweichende Fehlstellung feststellen, bleibt der Kontakt 52 stromlos, so dass die Spannungsversorgung des Motors 32 unterbrochen bleibt.

Mit der Erfindung ergeben sich besondere Vorteile:
Dadurch dass der weitere Motor 32 des weiteren Stetigförderers 30 der ortsfesten Übernahmestation 3 für die Lastübergabe oder Lastübernahme von der Batterie 6 des Zugfahrzeugs 5 des Trailerzuges 1 versorgt wird, benötigt die ortsfeste Übernahmestation 3 keine elektrische Anbindung und somit keinen Stromanschluss an ein Stromnetz des Gebäudes, in dem die ortsfesten Übernahmestation 3 aufgestellt ist. Dadurch ergibt sich eine hohe Flexibilität der ortsfesten Übernahmestation 3 und der Aufstellungsort der ortsfesten Übernahmestation 3 kann auf einfache Weise verändert werden, da die ortsfeste Übernahmestation 3 keinen separaten Stromanschluss an eine Stromnetz des Gebäudes benötigt und somit bei einer Änderung des Aufstellungsortes kein Installationsaufwand für den Stromanschluss des Motors 32 des Stetigförderers 30 der Übernahmestation 3 an das Stromnetz des Gebäudes erforderlich ist.

## Patentansprüche

1. Vorrichtung, umfassend eine ortsfeste Übernahmestation (3) und einen mindestens einen Trailerzuganhänger (2) und ein Zugfahrzeug (5) umfassenden Trailerzug (1) zur Übergabe von Lasten (L) von dem Trailerzuganhänger (2) in die ortsfeste Übernahmestation (3), wobei der Trailerzuganhänger (2) mit einem von einem Motor (27) angetriebenen Stetigförderer (25) zur Aufnahme der Last (L) versehen ist, wobei der Motor (27) des Stetigförderers (25) des Trailerzuganhängers (2) von einer Batterie (6) des Trailerzuges (1) versorgt ist, **dadurch gekennzeichnet, dass** an der Übernahmestation (3) ein von einem weiteren Motor (32) angetriebener weiterer Stetigförderer (30) zur Aufnahme der Last (L) angeordnet ist, wobei der weitere Motor (32) des weiterer Stetigförderers (30) an der Übernahmestation (3) in einer vorbestimmten Umschlagposition von der Batterie (6) des Trailerzugs (1) versorgt ist.

2. Vorrichtung nach Anspruch 1, **dadurch gekennzeichnet, dass** an der Übernahmestation (3) mindestens ein Kontakt (50) vorgesehen ist, an dem in der vorbestimmten Umschlagposition mindestens ein mit der Batterie (6) des Trailerzugs (1) in Verbindung stehender Kontakt (52), insbesondere ein Schaltkontakt, des Trailerzuganhängers (2) in Verbindung bringbar ist und dadurch einen Stromkreis zur Spannungsversorgung des weiteren Motors (32) des weiterer Stetigförderers (30) an der Übernahmestation (3) schließt.

3. Vorrichtung nach Anspruch 1 oder 2, **dadurch gekennzeichnet, dass** an der Übernahmestation (3) eine Sensoreinrichtung (46) zum Erkennen der vorbestimmten Umschlagposition des Trailerzuganhängers (2) vorgesehen ist.

4. Vorrichtung nach einem der Ansprüche 1 bis 3, **dadurch gekennzeichnet, dass** eine Batterie (6) des Zugfahrzeugs (5) die Versorgung des Motors (27) des Stetigförderers (25) des Trailerzuganhängers (2) und die Versorgung des weiteren Motors (32) des weiterer Stetigförderers (30) an der Übernahmestation (3) übernimmt.

5. Vorrichtung nach einem der Ansprüche 2 bis 4, **dadurch gekennzeichnet**, **dadurch gekennzeichnet, dass** der Kontakt (50) der Übernahmestation (3) auf dem Boden (B) angeordnet ist.

6. Vorrichtung nach einem der Ansprüche 2 bis 4, **dadurch gekennzeichnet, dass** der Kontakt (50) der Übernahmestation (3) an einer ortsfesten Schiene (40) angebracht ist.

7. Vorrichtung nach Anspruch 6, **dadurch gekennzeichnet, dass** die Sensoreinrichtung (46) an der ortsfesten Schiene (40) angebracht ist

8. Vorrichtung nach einem der Ansprüche 2 bis 4, **dadurch gekennzeichnet, dass** der Kontakt (50) der Übernahmestation (3) an der Übernahmestation (3) angebracht ist.

9. Vorrichtung nach einem der Ansprüche 2 bis 8, **dadurch gekennzeichnet, dass** der Trailerzuganhänger (2) mit zwei horizontal voneinander beabstandeten Kontakten (52) versehen ist, die zur Drehrichtungsumkehr des weiteren Motors (32) des Stetigförderers (30) der Übernahmestation (3) umpolbar sind.

10. Vorrichtung nach einem der Ansprüche 1 bis 9, **dadurch gekennzeichnet, dass** der von dem Motor (27) angetriebene Stetigförderer (25) des Trailerzuganhängers (2) in der Umschlagposition höhengleich zu dem weiteren Stetigförderer (30) der ortsfesten Übernahmestation (3) ausgerichtet ist.

11. Vorrichtung nach einem der Ansprüche 1 bis 10, **dadurch gekennzeichnet, dass** der Stetigförderer (25) des Trailerzuganhängers (2) als Bandförderer (26) oder als Rollenbahn oder als Kettenförderer ausgebildet ist.

12. Vorrichtung nach einem der Ansprüche 1 bis 11, **dadurch gekennzeichnet, dass** der weitere Stetigförderer (30) der Übernahmestation (3) als Bandförderer oder als Rollenbahn (31) oder als Kettenförderer ausgebildet ist.

13. Vorrichtungd nach einem der Ansprüche 1 bis 12, **dadurch gekennzeichnet, dass** der Trailerzuganhänger (2) einen Hubtisch (20) umfasst, der mit dem Stetigförderer (25) versehen ist.

14. Vorrichtung nach Anspruch 13, **dadurch gekennzeichnet, dass** der Hubtisch (20) mit dem Kontakt (52) versehen ist.

15. Vorrichtung nach Anspruch 13 oder 14, **dadurch gekennzeichnet, dass** der Hubtisch (20) mittels eines Huborgans (21) relativ zu einem Fahrwerk (13) des Trailerzuganhängers (2) höhenverstellbar ist.

16. Vorrichtung nach einem der Ansprüche 13 bis 15, **dadurch gekennzeichnet, dass** in der vorbestimmten Umschlagposition beim Absenken des Hubtisches (20) der mit der Batterie (6) des Trailerzugs (1) in Verbindung stehende Kontakt (52) des Trailerzuganhängers (2) an dem Kontakt (50) der Übernahmestation (3) anschlägt.

17. Vorrichtung nach einem der Ansprüche 13 bis 16, **dadurch gekennzeichnet**, **dadurch gekennzeichnet, dass** der Trailerzuganhänger (2) einen den Hubtisch (20) bildenden oder diesen aufnehmenden Tragrahmen (10) hat.

18. Vorrichtung nach einem der Ansprüche 1 bis 12, **dadurch gekennzeichnet, dass** der Trailerzuganhänger (2) einen mit einem Fahrwerk (13) versehenen Tragrahmen (10) aufweist, der mit dem Stetigförderer (25) versehen ist.

19. Vorrichtung nach Anspruch 18, **dadurch gekennzeichnet, dass** der Kontakt (52) an dem Tragrahmen (10) höhenverstellbar angeordnet ist und mittels eines Huborgangs relativ zum Tragrahmen (10) des Trailerzuganhängers (2) höhenverstellbar ist.

20. Vorrichtung nach Anspruch 19, **dadurch gekennzeichnet, dass** der Kontakt (52) an einem mittels des Huborgans höhenverstellbaren Träger (60) angeordnet ist, der mit einer Abstützvorrichtung (61), insbesondere einer Stützrolle (62), zum Abstützen des Trailerzuganhängers (2) auf dem Boden (B) versehen ist.

21. Vorrichtung nach Anspruch 20, **dadurch gekennzeichnet, dass** der Träger (60) seitlich an dem Stetigförderer (25) angeordnet ist und in der angehobenen Stellung das Höhenniveau des Stetigförderers (25) überragt.

## Claims

1. Device comprising a stationary transfer station (3) and a trailer train (1), comprising a trailer-train trailer (2) and a traction vehicle (5), for transferring loads (L) from the trailer-train trailer (2) to the stationary transfer station (3), wherein the trailer-train trailer (2) is provided with a continuous conveyor (25), driven by a motor (27), for receiving the load (L), wherein the motor (27) of the continuous conveyor (25) of the trailer-train trailer (2) is supplied with power by a battery (6) of the trailer train (1), **characterized in that** a further continuous conveyor (30), driven by a further motor (32), for receiving the load (L) is arranged on the transfer station (3), wherein the further motor (32) of the further continuous conveyor (30) on the transfer station (3) is supplied with power by the battery (6) of the trailer train (1) in a predetermined handling position.

2. Device according to Claim 1, **characterized in that** at least one contact (50) is provided on the transfer station (3), at least one contact (52), connected to the battery (6) of the trailer train (1), in particular a switching contact, of the trailer-train trailer (2) being able to be brought into connection with the first-mentioned contact in the predetermined handling position and as a result closing an electrical circuit for supplying power to the further motor (32) of the further continuous conveyor (30) on the transfer station (3).

3. Device according to Claim 1 or 2, **characterized in that** a sensor device (46) for identifying the predetermined handling position of the trailer-train trailer (2) is provided on the transfer station (3).

4. Device according to one of Claims 1 to 3, **characterized in that** a battery (6) of the traction vehicle (5) takes over the supply of power to the motor (27) of the continuous conveyor (25) of the trailer-train trailer (2) and the supply of power to the further motor (32) of the further continuous conveyor (30) on the transfer station (3).

5. Device according to one of Claims 2 to 4, **characterized in that** the contact (50) of the transfer station (3) is arranged on the ground (B).

6. Device according to one of Claims 2 to 4, **characterized in that** the contact (50) of the transfer station (3) is mounted on a stationary rail (40).

7. Device according to Claim 6, **characterized in that** the sensor device (46) is mounted on the stationary rail (40) .

8. Device according to one of Claims 2 to 4, **characterized in that** the contact (50) of the transfer station (3) is mounted on the transfer station (3).

9. Device according to one of Claims 2 to 8, **characterized in that** the trailer-train trailer (2) is provided with two contacts (52) which are horizontally spaced apart from one another and the polarity of which can be reversed in order to reverse the direction of rotation of the further motor (32) of the continuous conveyor (30) of the transfer station (3).

10. Device according to one of Claims 1 to 9, **characterized in that** the continuous conveyor (25), driven by the motor (27), of the trailer-train trailer (2) is aligned at the same height as the further continuous conveyor (30) of the stationary transfer station (3) in the handling position.

11. Device according to one of Claims 1 to 10, **characterized in that** the continuous conveyor (25) of the trailer-train trailer (2) is in the form of a belt conveyor (26) or in the form of a roller conveyor or in the form of a chain conveyor.

12. Device according to one of Claims 1 to 11, **characterized in that** the further continuous conveyor (30) of the transfer station (3) is in the form of a belt conveyor or in the form of a roller conveyor (31) or in the form of a chain conveyor.

13. Device according to one of Claims 1 to 12, **characterized in that** the trailer-train trailer (2) comprises a lifting table (20) which is provided with the continuous conveyor (25).

14. Device according to Claim 13, **characterized in that** the lifting table (20) is provided with the contact (52).

15. Device according to Claim 13 or 14, **characterized in that** the lifting table (20) is vertically adjustable relative to running gear (13) of the trailer-train trailer (2) by means of a lifting element (21).

16. Device according to one of Claims 13 to 15, **characterized in that**, in the predetermined handling position, when the lifting table (20) is lowered, the contact (52), connected to the battery (6) of the trailer train (1), of the trailer-train trailer (2) stops against the contact (50) of the transfer station (3).

17. Device according to one of Claims 13 to 16, **characterized in that** the trailer-train trailer (2) has a supporting frame (10) which forms or receives the lifting table (20).

18. Device according to one of Claims 1 to 12, **characterized in that** the trailer-train trailer (2) has a supporting frame (10) which is provided with running gear (13) and is provided with the continuous conveyor (25) .

19. Device according to Claim 18, **characterized in that** the contact (52) is arranged on the supporting frame (10) in a vertically adjustable manner and is vertically adjustable relative to the supporting frame (10) of the trailer-train trailer (2) by means of a lifting member.

20. Device according to Claim 19, **characterized in that** the contact (52) is arranged on a support (60) which is vertically adjustable by means of the lifting member and is provided with a support device (61), in particular a support roller (62), for supporting the trailer-train trailer (2) on the ground (B).

21. Device according to Claim 20, **characterized in that** the support (60) is arranged on the side of the continuous conveyor (25) and in the raised position projects beyond the vertical level of the continuous conveyor (25).

## Revendications

1. Arrangement, comprenant une station de prise en charge (3) fixe et un train routier (1) comprenant au moins une remorque de train routier (2) et un véhicule tracteur (5) pour le transfert de charges (L) de la remorque de train routier (2) dans la station de prise en charge (3) fixe, la remorque de train routier (2) étant pourvue d'un convoyeur en continu (25) entraîné par un moteur (27) destiné à accueillir la charge (L), le moteur (27) du convoyeur en continu (25) de la remorque de train routier (2) étant alimenté par une batterie (6) du train routier (1), **caractérisé en ce qu'**un convoyeur en continu supplémentaire (30) entraîné par un moteur supplémentaire (32) et destiné à accueillir la charge (L) est disposé au niveau de la station de prise en charge (3), le moteur supplémentaire (32) du convoyeur en continu supplémentaire (30) au niveau de la station de prise en charge (3) étant alimenté par la batterie (6) du train routier (1) dans une position de transbordement prédéterminée.

2. Arrangement selon la revendication 1, **caractérisé en ce qu'**au moins un contact (50) est présent au niveau de la station de prise en charge (3), avec lequel peut être mis en liaison, dans la position de transbordement prédéterminée, au moins un contact (52) qui est en liaison avec la batterie (6) du train routier (1), notamment un contact de commutation, de la remorque de train routier (2) et ferme ainsi un circuit électrique servant à l'alimentation électrique du moteur supplémentaire (32) du convoyeur en continu supplémentaire (30) au niveau de la station de prise en charge (3).

3. Arrangement selon la revendication 1 ou 2, **caractérisé en ce qu'**un dispositif capteur (46) destiné à reconnaître la position de transbordement prédéterminée de la remorque de train routier (2) est présent au niveau de la station de prise en charge (3).

4. Arrangement selon l'une des revendications 1 à 3, **caractérisé en ce qu'**une batterie (6) du véhicule tracteur (5) prend en charge l'alimentation du moteur (27) du convoyeur en continu (25) de la remorque de train routier (2) et l'alimentation du moteur supplémentaire (32) du convoyeur en continu supplémentaire (30) au niveau de la station de prise en charge (3).

5. Arrangement selon l'une des revendications 2 à 4, **caractérisé en ce que** le contact (50) de la station de prise en charge (3) est disposé sur le sol (B).

6. Arrangement selon l'une des revendications 2 à 4, **caractérisé en ce que** le contact (50) de la station de prise en charge (3) est monté sur un rail fixe (40).

7. Arrangement selon la revendication 6, **caractérisé en ce que** le dispositif capteur (46) est monté sur le rail fixe (40).

8. Arrangement selon l'une des revendications 2 à 4, **caractérisé en ce que** le contact (50) de la station de prise en charge (3) est monté au niveau de la station de prise en charge (3).

9. Arrangement selon l'une des revendications 2 à 8, **caractérisé en ce que** la remorque de train routier (2) est pourvue de deux contacts (52) espacés horizontalement l'un de l'autre, lesquels peuvent faire l'objet d'une inversion de polarité en vue d'inverser le sens de rotation du moteur supplémentaire (32) du convoyeur en continu supplémentaire (30) de la station de prise en charge (3).

10. Arrangement selon l'une des revendications 1 à 9, **caractérisé en ce que** dans la position de transbordement, le convoyeur en continu (25) entraîné par le moteur (27) de la remorque de train routier (2) est orienté à la même hauteur par rapport au convoyeur en continu supplémentaire (30) de la station de prise en charge (3).

11. Arrangement selon l'une des revendications 1 à 10, **caractérisé en ce que** le convoyeur en continu (25) de la remorque de train routier (2) est réalisé sous la forme d'un convoyeur à bande (26) ou d'un train de rouleaux ou d'un convoyeur à chaîne.

12. Arrangement selon l'une des revendications 1 à 11, **caractérisé en ce que** le convoyeur en continu supplémentaire (30) de la station de prise en charge (3) est réalisé sous la forme d'un convoyeur à bande ou d'un train de rouleaux (31) ou d'un convoyeur à chaîne.

13. Arrangement selon l'une des revendications 1 à 12, **caractérisé en ce que** la remorque de train routier (2) comporte un plateau de levage (20), lequel est pourvu du convoyeur en continu (25).

14. Arrangement selon la revendication 13, **caractérisé en ce que** le plateau de levage (20) est pourvu du contact (52) .

15. Arrangement selon la revendication 13 ou 14, **caractérisé en ce que** le plateau de levage (20) est positionnable en hauteur au moyen d'un organe de levage (21) par rapport au train de roulement (13) de la remorque de train routier (2).

16. Arrangement selon l'une des revendications 13 à 15, **caractérisé en ce que** dans la position de transbordement prédéterminée, lors de l'abaissement du plateau de levage (20), le contact (52) de la remorque de train routier (2) qui se trouve en liaison avec la batterie (6) du train routier (1) vient en butée contre le contact (50) de la station de prise en charge (3).

17. Arrangement selon l'une des revendications 13 à 16, **caractérisé en ce que** la remorque de train routier (2) comprend un cadre porteur (10) qui forme le plateau de levage (20) ou qui accueille celui-ci.

18. Arrangement selon l'une des revendications 1 à 12, **caractérisé en ce que** la remorque de train routier (2) possède un cadre porteur (10) pourvu d'un train de roulement (13) et qui est pourvu du convoyeur en continu (25) .

19. Arrangement selon la revendication 18, **caractérisé en ce que** le contact (52) est monté positionnable en hauteur sur le cadre porteur (10) et il est positionnable en hauteur au moyen d'un organe de levage par rapport au cadre porteur (10) de la remorque de train routier (2).

20. Arrangement selon la revendication 19, **caractérisé en ce que** le contact (52) est disposé sur un élément porteur (60) positionnable en hauteur au moyen de l'organe de levage, lequel est pourvu d'un arrangement de soutien (61), notamment d'un rouleau d'appui (62), destiné à soutenir la remorque de train routier (2) sur le sol (B).

21. Arrangement selon la revendication 20, **caractérisé en ce que** l'élément porteur (60) est monté latéralement sur le convoyeur en continu (25) et, dans la position levée, surplombe le niveau de hauteur du convoyeur en continu (25).
